# EUROPÄISCHE PATENTSCHRIFT

(11) **EP 1 194 682 B1**
(45) Veröffentlichungstag und Bekanntmachung des Hinweises auf die Patenterteilung: **14.05.2003**
(21) Anmeldenummer: 00945621.1
(22) Anmeldetag: 08.06.2000
(51) Int. Cl.: F01N 3/20, B01D 53/94

(54) **VORRICHTUNG ZUR DOSIERUNG EINES REDUKTIONSMITTELS**
DEVICE FOR DOSING A REDUCING AGENT
DISPOSITIF POUR DOSER UN AGENT DE REDUCTION

(30) Priorität: 22.06.1999 DE 19928551; 30.09.1999 DE 19946900
(43) Veröffentlichungstag der Anmeldung: 10.04.2002
(73) Patentinhaber: ROBERT BOSCH GMBH, 70442 Stuttgart (DE)
(72) Erfinder: FRISCH, Walter, D-70435 Stuttgart (DE); HUBER, Sven, D-83395 Freilassing (DE); KRAH, Jürgen, A-5101 Bergheim (AT); MAYER, Hanspeter, A-5421 Adnet (AT); OFFENHUBER, Michael, A-5421 Adnet (AT); SACHSENHOFER, Robert, A-5411 Oberalm (AT); WEISS, Roland, A-5424 Vigaun (AT); FOETSCHL, Markus, A-5580 Unternberg (AT); SCHWARZ, Roland, A-5020 Salzburg (AT)
(86) Internationale Anmeldenummer: DE0001877
(87) Internationale Veröffentlichungsnummer: WO00079108

(56) Entgegenhaltungen:
- EP-A- 0 886 043
- DE-A- 4 230 056
- DE-A- 19 750 138
- DE-C- 19 743 337
- PATENT ABSTRACTS OF JAPAN vol. 015, no. 481 (M-1187), 6. Dezember 1991 (1991-12-06) & JP 03 206314 A (YANMAR DIESEL ENGINE CO LTD), 9. September 1991 (1991-09-09)

## Beschreibung

Die vorliegende Erfindung betrifft eine Vorrichtung zur Dosierung eines Reduktionsmittels, insbesondere eines Harnstoffs bzw. einer Harnstoff-Wasser-Lösung, im Rahmen einer katalytischen Abgasnachbehandlung nach dem Oberbegriff des Patentanspruchs 1.

Als Folge der in den letzten Jahren stets niedriger anzusetzenden Schadstoffgrenzwerte sind zahlreiche Vorrichtungen und Verfahren zur Nachbehandlung von Abgasen von Brennkraftmaschinen entwickelt worden. Beispielsweise mittels Katalysatorsystemen, welche Harnstoff und/oder Ammoniak als Reduktionsmittel zur NOₓ-Konvertierung verwenden, sind effiziente Abgasnachbehandlungssysteme zur Verfügung gestellt.

Um eine Verminderung von NOₓ-Bestandteilen in Abgasen zu erzielen, wurden insbesondere für Dieselmotoren Reduktionskatalysatoren entwickelt, die üblicherweise in sogenannte SCR-Katalysatoren (engl. Selective Catalytic Reduction) mit Harnstoffdosiersystem und Speicherkatalysatoren unterteilt werden. Die sogenannten SCR-Katalysatoren werden mittels einer Harnstoff- und/oder Ammoniakreduktionsmittelzufuhr regeneriert, während die sogenannten Speicherkatalysatoren mit Kohlenwasserstoffen des mitgeführten Brennkraftmaschinen-Brennstoffs in sogenannten Abgasfettphasen regeneriert werden.

Aus der EP-A-0381236 ist ein System bekannt, welches zum Entfernen von Stickoxiden in Abgasen aus einem Dieselmotor Ammoniak als Reduktionsmittel zudosiert. Bei diesem System ist ferner ein Turbolader vorgesehen, welcher den Druck des Abgases senkt. Eine verwendete Harnstoff-Wasser-Lösung wird mittels Druckluft zudosiert.

Aus der DE-A-44 41 261 ist eine Einrichtung zum Nachbehandeln von Abgasen einer Brennkraftmaschine bekannt, bei welcher die Leistung des Katalysators über eine Dosiereinrichtung verbessert werden soll. Die Dosiereinrichtung ist als Kleinstmengendosier-Verdrängerpumpe ausgebildet, die auf einem zylindrischen Rotationskörper einen Gewindegang in der Form einer Nut aufweist, wobei zur Änderung der Förderleistung der Rotationskörper mit variabler Drehzahl angetrieben wird. Die Zugabe des Reduktionsmittels in das Abgassystem erfolgt vorzugsweise kennfeldabhängig, d. h. in Abhängigkeit von Menge und/oder Zusammensetzung des Abgases.

Bei herkömmlichen Systemen zur Dosierung eines Reduktionsmittels werden in Modulbauweise aneinandergereihte Einzelkomponenten, welche miteinander über Schlauch- oder Rohrverbindungen verbunden sind, verwendet. Ein derartiges System ist beispielsweise auch aus der DE 42 30 056 A1 bekannt.

Aufgrund der geringen Oberflächenspannung von Harnstoff bzw. Harnstofflösungen sind derartige Schlauch- oder Rohrverbindungen zwischen einzelnen Systemkomponenten nur mit großem Aufwand abdichtbar, wodurch sich die Kosten des Systems insgesamt erhöhen. Hierbei muß insbesondere berücksichtigt werden, daß ein Dosiersystem im mobilen Betrieb Schwingbeschleunigungen ausgesetzt ist, welche mit der Zeit schlechtere Dichtungscharakteristika verursachen können.

Dokument JP 3 206 314 A offenbart eine Vorrichtung zur Dosierung eines Reduktionsmittels mit Mitteln zur Luftzufuhr in eine Mischkammer, Mitteln zur dosierten Reduktionsmittelzufuhr in die Mischkammer, Mitteln zur Bildung eines Aerosols, Mitteln zur dosierten Abgabe des Aerosols in eine Aerosolleitung und wobei die Mittel zur Luftzufuhr, die Mittel zur dosierten Reduktionsmittelzufuhr sowie die Mischkammer an einem Block befestigt sind.

Aufgabe der vorliegenden Erfindung ist daher die Schaffung einer Vorrichtung zur Dosierung eines Reduktionsmittels, welches gegenüber herkömmlichen Vorrichtungen in unaufwendigerer Weise abdichtbar ist.

Diese Aufgabe wird gelöst durch eine Vorrichtung mit den Merkmalen des Patentanspruchs 1.

Die erfindungsgemäße Vorrichtung erlaubt in einfacher Weise die Konstruktion eines für mobile Anwendungen tauglichen Reduktionsmittel-Dosiersystems. Schwingbeschleunigungen, welche bei herkömmlichen Systemen zu einer Lockerung von Schlauch- und Rohrverbindungen führen konnten, können wirksam vermieden bzw. in ihrer Wirkung eingeschränkt werden. Erfindungsgemäß ist eine feste Verbindung zwischen den Systemkomponenten vorgesehen. Durch Befestigung oder Integration der Bauteile an bzw. in einem Kunststoffblock wird die Montage vereinfacht. Gleichzeitig kann die Baugröße der Vorrichtung gegenüber herkömmlichen Vorrichtungen verringert werden, da auf Verschraubungen und freiliegende Leitungen weitgehend verzichtet werden kann.

Die Verringerung der Baugröße führt ebenfalls zu einer Verringerung von Totvolumina in der Reduktionsmittel-Zufuhrleitung. Ein erfindungsgemäß vorgesehener Block ist auch mechanisch stabiler als ein aus Rohren und Verschraubungen aufgebautes Reduktionsmittel-Dosiersystem. Durch die Verringerung der Anzahl von Verschraubungspunkten und einer sich daraus ergebenden geringeren Anzahl an Dichtstellen wird insgesamt eine bessere Dichtheit erzielt. Ein Kunststoffblock ist wesentlich kostengünstiger bereitzustellen als ein Verschraubungen und Rohrleitungen verwendendes System.

Es erweist sich ferner als vorteilhaft, daß aufgrund des geringeren Totvolumens, welches mit der erfindungsgemäßen Vorrichtung erzielbar ist, eine Entlüftungszeit, während der anstelle des Reduktionsmittels Luft durch die Reduktionsmittelleitungen transportiert wird, gegenüber herkömmlichen Systemen verkürzbar ist. Bei der erfindungsgemäßen Vorrichtung ist ferner eine aufzubringende Heizleistung für ein eventuelles Auftauen nach einem Gefrieren vermindert.

Der Block ist aus einem elektrisch leitfähigem Kunststoff hergestellt. Mit einem derart ausgebildeten Block ist eine gleichmäßige Erwärmung bzw. Heizung eines Harnstoff-Dosiersystems in einfacher Weise erzielbar. Bei herkömmlichen Systemen, welche eine Vielzahl hydraulischer oder pneumatischer Leitungen aufwiesen, wurde Heizenergie nur punktuell oder über Flächen eingebracht, so daß die Gefahr von für einzelne Bauteile schädliche Wärmespitzen bestand. Das erfindungsgemäße Vorsehen eines elektrisch leitenden Kunststoffs dient ferner in vorteilhafter Weise zur elektromagnetischen Abschirmung des Systems und kann so ein konventionelles Metallgehäuse ersetzen. Die erzielbare gleichmäßige Erwärmung schont die Bauteile und ermöglicht ein schnelleres Auftauen, da die Wärme über die gesamten hydraulischen Leitungen gleichmäßig eingebracht werden kann. Die abschirmenden Eigenschaften gegen elektromagnetische Strahlen des elektrisch leitenden Kunststoffs werden, wie erwähnt, benutzt, um ein Metallgehäuse zu ersetzen, da dessen metallische Schutzeigenschaften nicht mehr benötigt werden. Hierbei sind insbesondere zwei konstruktive Möglichkeiten denkbar, nämlich einerseits die Ausbildung eines Kunststoffblocks mit aufgesetztem Steuergerät, und andererseits ein Steuergerät mit umschließendem Kunststoffblock. Ein elektrisch leitender Kunststoff kann sich über seine gesamte Masse gleichmäßig erwärmen.

Vorteilhafte Ausgestaltungen der erfindungsgemäßen Vorrichtung sind Gegenstand der Unteransprüche.

Zweckmäßigerweise weist der Kunststoffblock zwei mit einer Spannung beaufschlagbare Elektroden auf. Die Temperatur des Kunststoffblocks kann über entsprechende Beaufschlagung der Elektroden mit einer Spannung in einfacher Weise gesteuert werden. Es sind keine zusätzlichen Bohrungen für PTC-Elemente oder Heizpatronen in dem Kunststoffblock notwendig. Durch Wegfall derartiger Komponenten können zusätzlich Kosten eingespart werden. Auch werden zusätzliche Heizspiralen in dem Kunststoffblock nicht mehr benötigt.

Gemäß einer bevorzugten Ausführungsform der erfindungsgemäßen Vorrichtung ist der Block aus einem Kunststoff hergestellt, welchem elektrisch leitfähige Partikel zugegeben sind. Durch Zugabe von elektrisch leitfähigen Partikeln sind die beschriebenen Vorteile eines elektrisch leitenden Kunststoffblocks in einfacher Weise realisierbar.

Zweckmäßigerweise weisen die Mittel zur Luftzufuhr eine Luftzufuhrleitung, ein Luftdruckregelventil, einen Luftdrucksensor, ein Rückschlagventil und ein Dosierventil auf. Bei Verwendung dieser Komponenten ist eine gewünschte dosierte Luftzufuhr in einfacher Weise steuerbar.

Zweckmäßigerweise weisen die Mittel zur Reduktionsmittelzufuhr eine Reduktionsmittel-Zufuhrleitung, eine Pumpe, einen Druckregler, einen Druckdämpfer, einen Drucksensor, ein Dosierventil und wenigstens ein Rückschlagventil auf.

Die erfindungsgemäße Vorrichtung wird nun anhand der beigefügten Zeichnung weiter beschrieben. In dieser zeigt
- Figur 1: eine blockschaltbildartige Darstellung eines Harnstoff-Dosiersystems, welches erfindungsgemäß wenigstens teilweise an einem zentralen Kunststoffblock befestigt bzw. in diesen integriert ist,
- Figur 2: eine perspektivische Ansicht einer bevorzugten Ausführungsform des erfindungsgemäßen Dosiersystems,
- Figur 3: eine geschnittene Ansicht einer weiteren bevorzugten Ausführungsform des erfindungsgemäßen Harnstoff-Dosiersystems,
- Figur 4: eine weitere Schnittansicht der Ausführungsform der Figur 3 entlang der Linie K-K, und
- Figur 5: eine schematische perspektivische Ansicht einer bevorzugten Ausführungsform des erfindungsgemäß verwendeten elektrisch leitfähigen Kunststoffblocks.

Die Funktionsweise sowie der Aufbau eines erfindungsgemäßen Reduktionsmittel-Dosiersystems wird nun anhand eines Harnstoff-Dosiersystems, wie es in den Figuren dargestellt ist, beispielhaft beschrieben.

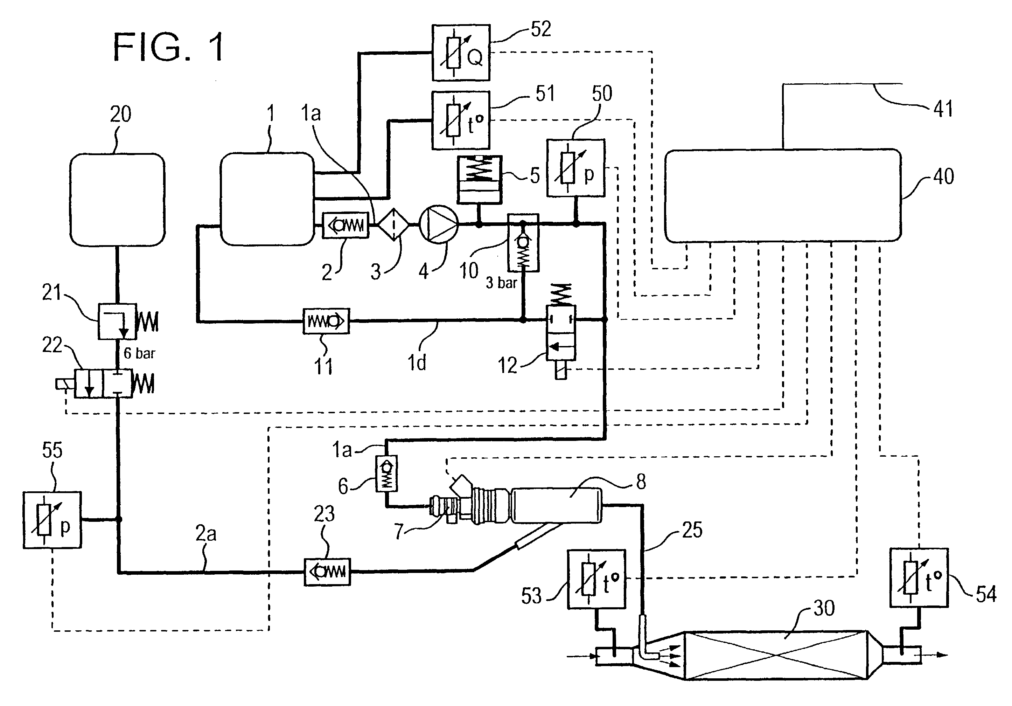

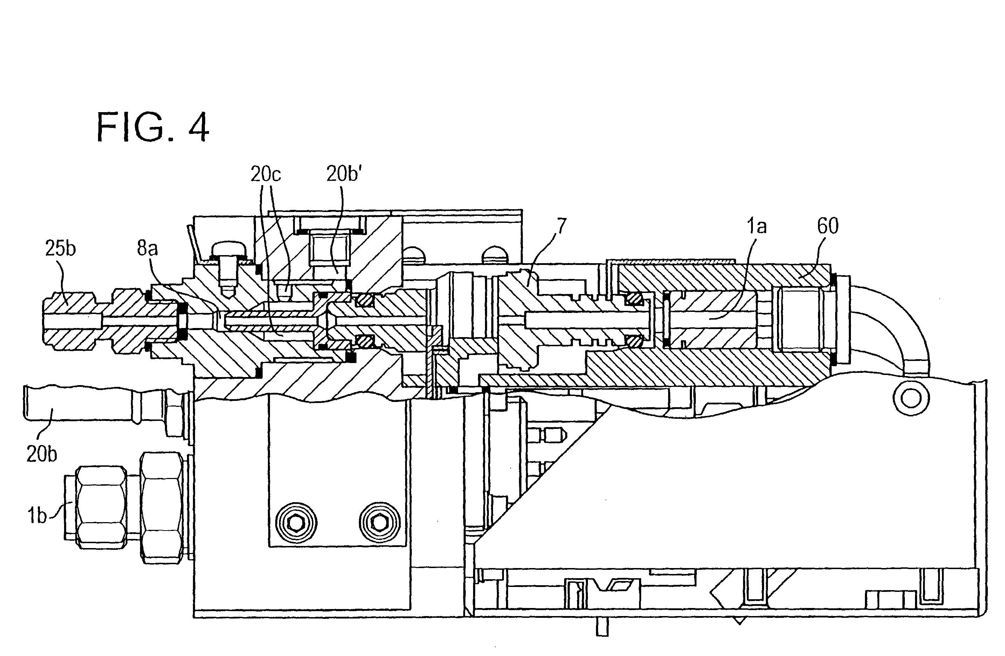

In Figur 1 ist mit 1 ein Harnstofftank bezeichnet, aus welchem eine Harnstoff-Wasser-Lösung über eine Harnstoffleitung 1a mit Rückschlagventil 2 und einem als Filtersieb ausgeführten Filter 3 von einer Förderpumpe 4 angesaugt und über einen Druck- bzw. Pulsationsdämpfer 5 sowie ein Rückschlagventil 6 zu einem Dosierventil 7 einer Mischkammer 8 gefördert wird. Das Dosierventil 7 dosiert die erforderliche Harnstoff-Wasser-Lösung in einen weiter unten unter Bezugnahme auf die Figur 4 beschriebenen Mischraum einer Mischkammer ein. Eine eventuell auftretende Überströmmenge der Harnstoff-Wasser-Lösung ist über einen Druckregler 10 und ein Rückschlagventil 11 durch eine Rücklaufleitung ld in den Harnstofftank 1 zurückführbar. Eine Entlüftung ist über einen Entlüftungskreislauf, welcher ein Entlüftungsventil 12 aufweist, durchführbar.

Mit 20 ist ferner ein Druckluftbehälter bezeichnet, aus welchem Druckluft über eine Druckluftleitung 2a mit einem Druckbegrenzer 21, einem 2/2-Wegeventil 22 und ein Rückschlagventil 23 in die Mischkammer einbringbar ist.

In der Mischkammer wird unter Beaufschlagung der Harnstoff-Wasser-Lösung mittels der Druckluft ein Aerosol und Wandfilm erzeugt, welches bzw. welcher über eine Aerosolleitung 25 in einen Katalysator 30 eingebracht wird. Ein Steuergerät 40 erfaßt hierbei Signale, die von einem übergeordneten Motorsteuergerät über eine CAN-Datenleitung 41 empfangen werden, sowie die Signale von Druck-, Temperatur- bzw. Füllstandsensoren 50 bis 55, welche an sich bekannt sind und hier nicht weiter erläutert werden. Das Steuergerät 40 berechnet aus diesen Informationen eine Harnstoff-Dosiermenge, welche einem den Katalysator 30 durchströmenden Abgas zugegeben werden soll. Am Steuergerät 40 befindet sich (nicht dargestellt) der Anschluß für die Spannungsversorgung und, wie bereits beschrieben, die Motorsteuergerät-Datenleitung (CAN-Leitung) 41.

Das Steuergerät 40 regelt mit Hilfe der beschriebenen Magnetventile den Druck in der Druckluftleitung, und überwacht ferner den Harnstoff-Wasser-Lösungsdruck. Das Steuergerät 40 erkennt Abweichungen und Fehler, speichert diese und bringt sie durch ein (nicht gezeigtes) Diagnosegerät am PC zur Anzeige. Eine (ebenfalls nicht gezeigte) Funktionsanzeige zeigt einen System-Error an. Die Funktionsanzeige beinhaltet auch die System-Betriebslampe und eine Tankstandsanzeige.

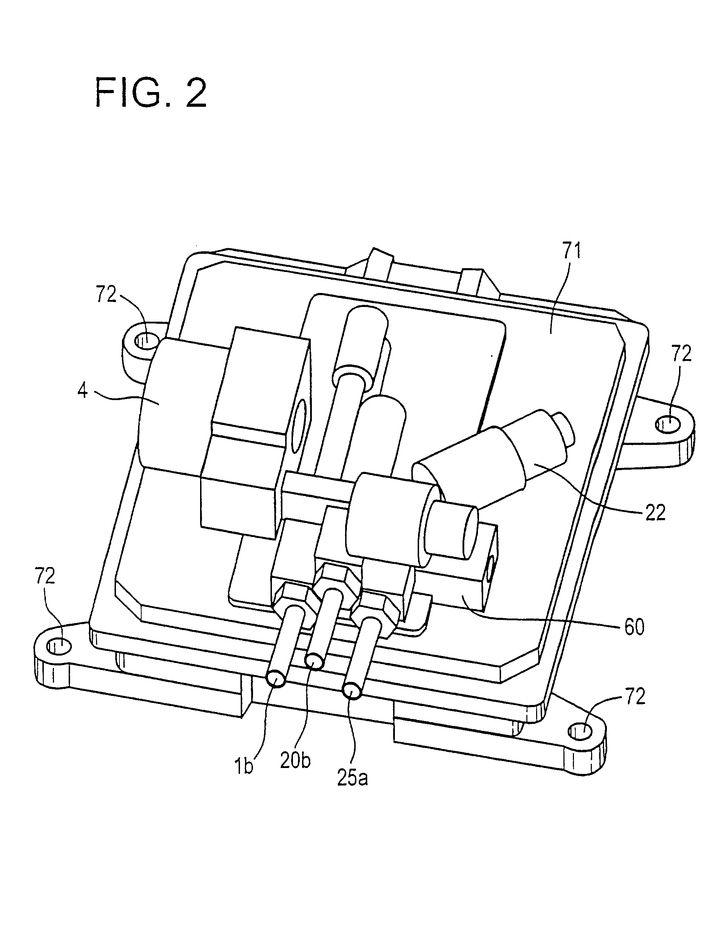

Sämtliche der dargestellten Komponenten, mit Ausnahme des Steuergerätes 40, des Harnstofftanks 1 und des Luftvorratsbehälters 20 sind gemäß der beschriebenen Ausführungsform der erfindungsgemäßen Vorrichtung an einem zentralen Kunststoffblock, wie er in den Figuren 2 bis 4 dargestellt ist, befestigbar bzw. wenigstens teilweise in einem derartigen Block integrierbar. Der zentrale Kunststoffblock ist in den Figuren 2 bis 4 mit Bezugsziffer 60 bezeichnet. Der Kunststoffblock 60 ist mit sämtlichen befestigten bzw. integrierten Komponenten in ein insbesondere zweiteiliges (nicht dargestelltes) Gehäuse einbaubar. Mit 71 ist ferner ein an dem Gehäuse befestigbarer Steuergerätedeckel bezeichnet. Das Gehäuse ist beispielsweise unter Verwendung von Befestigungsbohrungen 72 an geeigneter Stelle festlegbar.

Das erfindungsgemäße Prinzip der Befestigung von Dosiersystemkomponenten an einem zentralen Block bzw. deren Integration in einem derartigen Block wird nun anhand der Figuren 2 bis 4 weiter erläutert.

In Figur 2 erkennt man als auf den Block 60 aufgebrachte Komponenten das Luftdruckregelventil 22, die Förderpumpe 4, einen Anschluß 1b für die Harnstoffleitung 1a, einen Anschluß 20b für die Luftzufuhrleitung 20a, einen Anschluß 25a für die Aerosolleitung 25 sowie weitere Komponenten, deren Funktion an sich bekannt ist und daher keiner näheren Erläuterung bedarf.

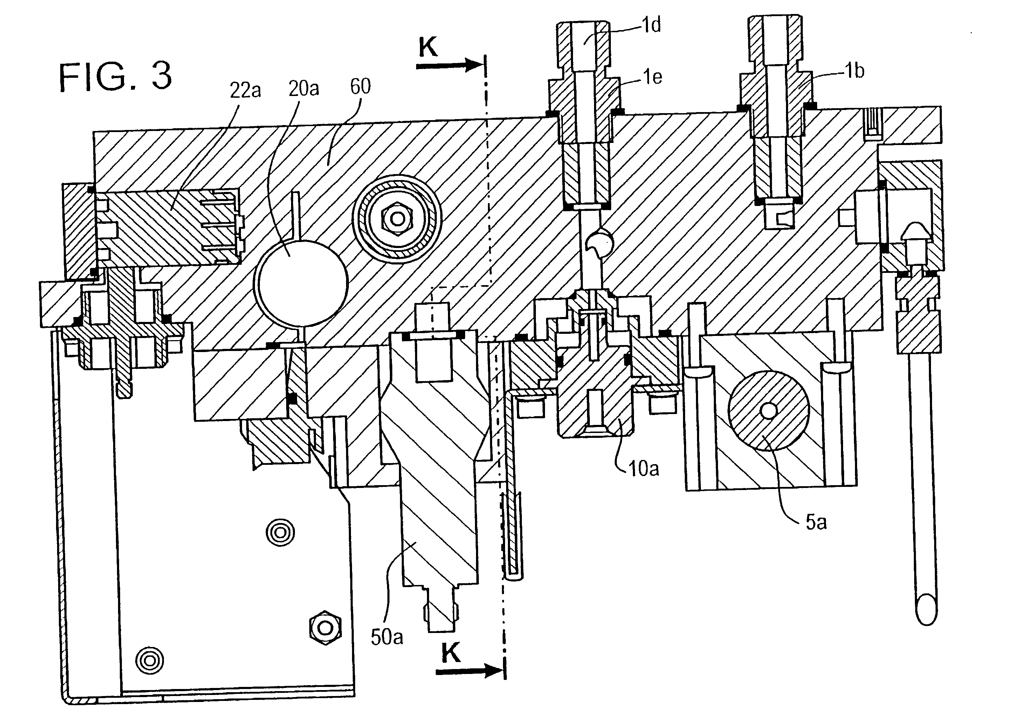

In der Figur 3 sind gleiche bzw. gleichartige Komponenten, die bereits im Zusammenhang mit Figur 1 und 2 beschrieben wurden, mit gleichen Bezugszeichen versehen. Man erkennt beispielsweise in Figur 3 den Harnstoffzufuhranschluß 1b, eine integrierte Luftzufuhrleitung 20a, einen dem Ventil 22 der Figur 1 entsprechenden Luftdruckregler 22a, einen dem Druckregler 10 der Figur 1 entsprechenden Druckregler 10a sowie einen dem Drucksensor 50 der Figur 1 entsprechenden Drucksensor 50a und einem dem Druckdämpfer der Figur 1 entsprechenden Druckdämpfer 5a. In Figur 3 ist ferner erkennbar ein Anschluß 1e für die Harnstoff-Rücklaufleitung 1d.

Unter Bezugnahme auf Figur 4 erkennt man insbesondere die folgenden Komponenten, welche in den zentralen Kunststoffblock 60 eingebracht sind: den Druckluftleitungsanschluß 20b, den Aerosolleitungsanschluß 25b und den Harnstoffleitungsanschluß 1b. Eine in dem Block 60 geführte Druckluftleitung ist mit 20b' bezeichnet. Von hier gelangt Druckluft über einen weiteren Leitungsabschnitt 20c und über einen Ringspalt in einen Mischraum 8a einer Mischkammer 8. Man erkennt hier ferner eine integrierte Harnstoffleitung 1a, über welche der zugeführte Harnstoff über das bereits im Zusammenhang mit Figur 1 erwähnte Dosierventil 7 in den Mischraum 8a zur Aerosolbildung einbringbar ist.

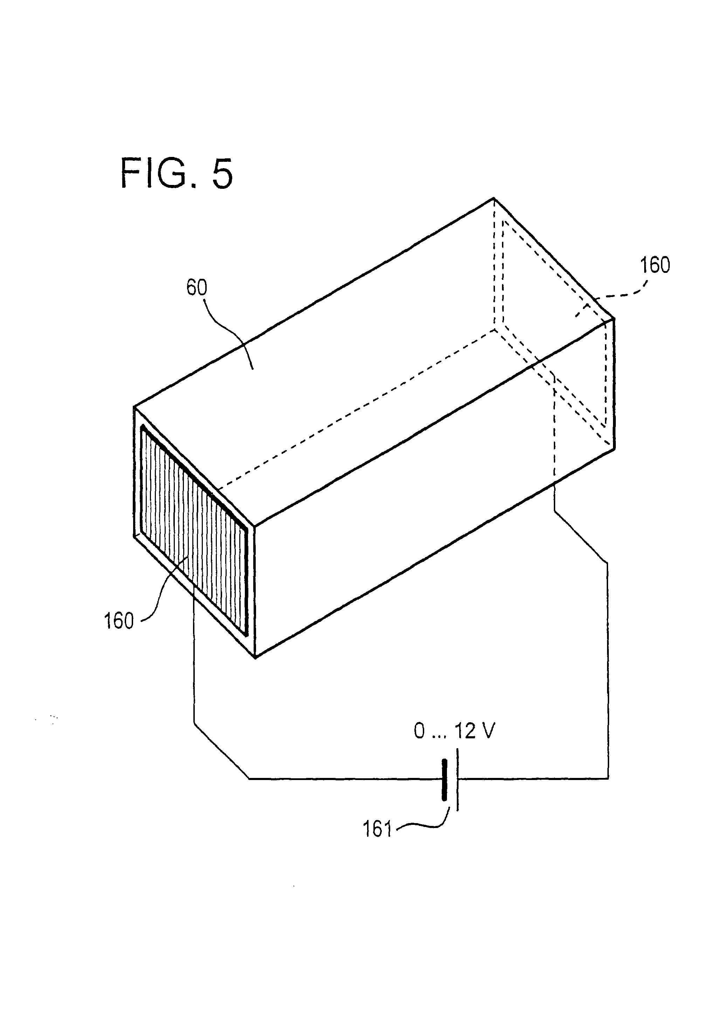

In Figur 5 ist schematisch eine weitere bevorzugte Ausführungsform des erfindungsgemäßen Kunststoffblocks 60 dargestellt. Hier ist der Anschaulichkeit halber auf eine Darstellung der in den Kunststoffblock 60 integrierten Komponenten verzichtet. In Figur 5 erkennt man lediglich zwei mit 160 bezeichnete Elektroden, welche über eine Spannungsquelle 161, beispielsweise die Fahrzeugbatterie eines Nkw, mit Spannung beaufschlagbar sind. Das die Spannungsversorgung der Elektroden 160 regelnde Steuergerät ist hier nicht im einzelnen dargestellt.

## Patentansprüche

1. Vorrichtung zur Dosierung eines Reduktionsmittels, insbesondere eines Harnstoffs bzw. einer Harnstoff-Wasser-Lösung, mit Mitteln (20a, 20b, 21, 22, 23, 55) zur Luftzufuhr in eine Mischkammer (8), Mitteln (1a, 2, 3, 4,5,6) zur dosierten Reduktionsmittelzufuhr in die Mischkammer (8), Mitteln (8a) zur Bildung eines Aerosols unter Verwendung der der Mischkammer (8) zugeführten Komponenten, und Mitteln zur dosierten Abgabe des Aerosols in eine Aerosolleitung (25), wobei die Mittel (20a, 20b, 21, 22, 23, 55) zur Luftzufuhr, die Mittel (1a, 2, 3, 4, 5, 6) zur dosierten Reduktionsmittelzufuhr sowie die Mischkammer (8) an einem Block (60) befestigt bzw. in diesen integriert sind, **dadurch gekennzeichnet, dass** der Block (60) aus einem elektrisch leitfähigen Kunststoff hergestellt ist und dass das Mittel (20a, 20b, 21, 22, 23, 55) zur Luftzufuhr Mittel zur dosierten Luftzufuhr ist.

2. Vorrichtung nach Anspruch 1, **dadurch gekennzeichnet, dass** der Block (60) aus einem Kunststoff hergestellt ist, dem elektrisch leitende Partikel zugegeben sind.

3. Vorrichtung nach einem der vorstehenden Ansprüche, **dadurch gekennzeichnet, dass** der Block (60) mit durch eine Spannung beaufschlagbaren Elektroden (160) ausgebildet ist.

4. Vorrichtung nach einem der vorstehenden Ansprüche, **dadurch gekennzeichnet, dass** die Mittel zur Luftzufuhr eine Luftmittelzufuhrleitung (20a), ein Luftdruckregelventil (22), einen Luftdrucksensor (55), ein Rückschlagventil (23) sowie ein Dosierventil (7) aufweisen.

5. Vorrichtung nach einem der vorstehenden Ansprüche, **dadurch gekennzeichnet, dass** die Mittel zur Reduktionsmittelzufuhr eine Reduktionsmittelzufuhrleitung (1a), eine Pumpe (4), einen Druckregler (10), einen Druckdämpfer (5), einen Drucksensor sowie ein Dosierventil und wenigstens ein Rückschlagventil (2) aufweisen.

## Claims

1. Device for metering a reducing agent, in particular urea or a urea/water solution, having means (20a, 20b, 21, 22, 23, 55) for feeding air into a mixing chamber (8), means (1a, 2, 3, 4, 5, 6) for the metered feeding of a reducing agent into the mixing chamber (8), means (8a) for forming an aerosol using the components fed to the mixing chamber (8), and means for the metered outputting of the aerosol into an aerosol line (25), the means (20a, 20b, 21, 22, 23, 55) for feeding air, the means (1a, 2, 3, 4, 5, 6) for the metered feeding of reducing agent and the mixing chamber (8) being attached to a block (60) or integrated therein, **characterized in that** the block (60) is manufactured from an electrically conductive plastic, and **in that** the means (20a, 20b, 21, 22, 23, 55) for feeding air are means for feeding air in a metered fashion.

2. Device according to Claim 1, **characterized in that** the block (60) is manufactured from a plastic to which electrically conductive particles are added.

3. Device according to one of the preceding claims, **characterized in that** the block (60) is formed using electrodes (160) to which a voltage can be applied.

4. Device according to one of the preceding claims, **characterized in that** the means for feeding air have an air means feed line (20a), an air pressure control valve (22), an air pressure sensor (55), a non-return valve (23) and a metering valve (7).

5. Device according to one of the preceding claims, **characterized in that** the means for feeding a reducing agent have a reducing agent feed line (1a), a pump (4), a pressure controller (10), a pressure damper (5), a pressure sensor, a metering valve and at least one non-return valve (2).

## Revendications

1. Dispositif de dosage d'un agent réducteur, notamment d'urée ou d'une solution aqueuse d'urée, comportant des moyens (20a, 20b, 21, 22, 23, 55) pour alimenter en air une chambre de mélange (8), des moyens (1a, 2, 3, 4, 5, 6) pour l'alimentation dosée en agent réducteur de la chambre de mélange (8), des moyens (8a) pour former un aérosol en utilisant les composants fournis à la chambre de mélange (8) et des moyens pour distribuer de manière dosée l'aérosol dans une conduite d'aérosol (25),
les moyens (20a, 20b, 21, 22, 23, 55) pour l'alimentation en air, les moyens (1a, 2, 3, 4, 5, 6) pour l'alimentation dosée en agent réducteur ainsi que la chambre de mélange (8) étant fixés à un bloc (60) ou intégrés dans celui-ci,
**caractérisé en ce que**
le bloc (60) est en matière plastique électro-conductrice, et
le moyen (20a, 20b, 21, 22, 23, 55) pour l'alimentation en air est constitué à un moyen de dosage de l'alimentation en air.

2. Dispositif selon la revendication 1,
**caractérisé en ce que**
le bloc (60) est en une matière plastique à laquelle on a ajouté des particules électro-conductrices.

3. Dispositif selon l'une des revendications précédentes,
**caractérisé en ce que**
le bloc (60) comporte des électrodes (160) qui peuvent recevoir une tension.

4. Dispositif selon l'une des revendications précédentes,
**caractérisé en ce que**
les moyens d'alimentation en air comportent une conduite d'alimentation en air (20a), une vanne de régulation de pression d'air (22), un capteur de pression d'air (55), un clapet anti-retour (23) ainsi qu'une vanne de dosage (7).

5. Dispositif selon l'une des revendications précédentes,
**caractérisé en ce que**
les moyens d'alimentation en agent réducteur comprennent une conduite d'alimentation en agent réducteur (1a), une pompe (4), un régulateur de pression (10), un amortisseur de pression (5), un capteur de pression ainsi qu'une vanne de dosage et au moins un clapet anti-retour (2).
